# EUROPEAN PATENT APPLICATION

(11) **EP 4 604 355 A1**
(43) Date of publication of application: **20.08.2025**
(21) Application number: 24157461.5
(22) Date of filing: 13.02.2024
(51) Int. Cl.: H02J 11/00, H01H 33/34

(54) **IMPROVEMENTS RELATING TO DIRECT CURRENT CIRCUIT BREAKERS IN POWER TRANSMISSION NETWORKS**

(71) Applicant: General Electric Technology GmbH, 5400 Baden (CH)
(72) Inventor: DAVIDSON, Colin, Stafford ST16 1WS (GB)
(74) Representative: Openshaw & Co.

(57) **Abstract**

There is provided direct current circuit breaker system operable to interrupt a direct current flowing through a direct current line, wherein the direct current line has a first potential with respect to ground potential and is elevated above ground level providing an electrically insulated gap, the direct current circuit breaker system comprising: one or more electrical subsystems elevated above ground level and configured to operate at the first potential; a first electrical generator elevated above ground level and configured to operate at the first potential, wherein the first electrical generator is arranged to convert received energy into electrical energy at the first potential, the electrical energy for powering the one or more electrical subsystems; and an electric motor for generating the received energy, wherein the electric motor is configured to operate at ground potential and is operably coupled to the first electrical generator via a physical connection, wherein the physical connection is electrically insulated.

## Description

### Field

The subject matter herein relates generally to the field of power transmission networks and more specifically to direct current circuit breakers in power transmission networks.

### Introduction

In high voltage direct current (HVDC) power transmission networks, alternating current (AC) power is typically converted to direct current (DC) power for transmission via overhead lines, under-sea cables and/or underground cables; hereinafter referred to as DC lines or HVDC lines. This conversion removes the need to compensate for the AC reactive/capacitive load effects imposed by the power transmission medium, i.e., the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e., power converters in converter stations) are required at each interface between AC and DC power to effect the required conversion from AC to DC or from DC to AC.

The choice of the most suitable HVDC power transmission network or scheme depends on the application and scheme features. Examples of power transmission networks include monopole power transmission networks and bipole power transmission networks.

HVDC lines typically operate at a high potential with respect to ground. For example. A HVDC may typically operate at 500kV with respect to ground. A HVDC line may comprise a DC circuit breaker (DCCB). A DCCB may comprise a number of electrical sub-systems that need to be pre-charged with considerable energy before the DCCB can operate.

There remains an ongoing requirement for improvements in this field.

### Summary

There is provided a direct current circuit breaker system operable to interrupt a direct current flowing through a direct current line, wherein the direct current line has a first potential with respect to ground potential and is elevated above ground level providing an electrically insulated gap, the direct current circuit breaker system comprising: one or more electrical sub-systems elevated above ground level and configured to operate at the first potential; a first electrical generator elevated above ground level and configured to operate at the first potential, wherein the first electrical generator is arranged to convert received energy into electrical energy at the first potential, the electrical energy for powering the one or more electrical sub-systems; and an electric motor for generating the received energy, wherein the electric motor is configured to operate at ground potential and is operably coupled to the first electrical generator via a physical connection, wherein the physical connection is electrically insulated.

There is provided a method of operating a direct current circuit breaker system to interrupt a direct current flowing through a direct current line, wherein the direct current line comprises a first potential with respect to ground potential and is elevated above ground level providing an electrically insulated gap, the method comprising: converting, by a first electrical generator, received energy into electrical energy at the first potential, the electrical energy for powering one or more electrical sub-systems, wherein the one or more electrical sub-systems and first electrical generator are elevated above ground level and operate at the first potential; and generating the received energy using an electric motor operating at ground potential, wherein the electric motor is operably coupled to the first electrical generator via a physical connection, wherein the physical connection is electrically insulated.

It will be appreciated that particular features of different aspects share the technical effects and benefits of corresponding features of other aspects of the invention. More specifically, the controller, power converter, power transmission network, share the technical effects and benefits of the direct current circuit breaker and method.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

Embodiments of the invention will now be described by way of example only and with reference to the accompanying drawings, in which:
Figure 1 shows generically, an example of a power transmission network in accordance with aspects of the present disclosure;
Figure 2 shows an embodiment of a controller for a power converter in accordance with aspects of the present disclosure;
Figure 3 shows the components of a hybrid DCCB module in accordance with aspects of the present disclosure;
Figure 4 illustrates the components of a hybrid DCCB module in accordance with aspects of the present disclosure;
Figure 5 illustrates multiple hybrid DCCB modules connected in series in accordance with aspects of the present disclosure;
Figure 6 illustrates a DCCB system in accordance with aspects of the present disclosure;
Figure 7 illustrates a DCCB system in accordance with aspects of the present disclosure;
Figure 8 illustrates a DCCB system in accordance with aspects of the present disclosure;
Figure 9 illustrates a DCCB system in accordance with aspects of the present disclosure;
Figure 10 illustrates a DCCB system in accordance with aspects of the present disclosure;
Figure 11 illustrates a DCCB system in accordance with aspects of the present disclosure;
Figure 12 illustrates a transformer in accordance with aspects of the present disclosure;
Figure 13 illustrates a flowchart of a method of operating a DCCB module.

### Detailed description

Examples described herein may relate to a method for providing auxiliary power to the live components of a high-voltage DC circuit-breaker (DCCB), in particular a hybrid DCCB. This is a major engineering challenge for a DCCB because the DCCB contains a number of electrical sub-systems, all operating normally at the potential of the HVDC line (typically 500 kV) with respect to ground, and some of these sub-systems may be pre-charged with a considerable energy (several kilojoules - and with some designs, some hundreds of kilojoules) before the DCCB can be operated.

Examples described herein may relate to the provision of auxiliary power supplied to the live components of a DCCB from ground level. Examples described herein may relate to the provision of auxiliary power that is supplied mechanically to the live components of the DCCB, from ground level, by using an electric motor at ground potential, coupled to an insulating drive shaft and thence to a generator located at the potential of the DCCB components. The generator may be used to pre-charge a storage capacitor within the DCCB which may be used as the primary energy source for the DCCB and may then be distributed to other components in the DCCB by other means.

The generator may be an AC synchronous generator feeding a diode rectifier. The generator may be a DC generator. One or more electric motors may drive two or more electrical generators to supply power to two or more electrically isolated sections of the DCCB.

The auxiliary power may be supplied to the live components of the DCCB from ground level in a two-stage process. In the first stage, auxiliary power may be supplied across the high-voltage insulation barrier from ground potential and used to pre-charge a storage capacitor within the DCCB which is used as the primary energy source for the DCCB. The primary energy store may be a storage capacitor used to operate an actuator for the mechanical switch in the main branch of the DCCB. Energy may then be distributed to other components in the DCCB in a second stage. The energy transmission means used for the second stage (internal to the DCCB) may be different to that used for the first stage (transmission from ground).

The method used for the second stage may involve connecting an inverter across the storage capacitor and using this inverter to drive a high-frequency current loop which is fed through a set of current transformers. This may be used to provide the small amounts of power needed by other systems at different potentials, such as insulated-gate bipolar transistor (IGBT) gate drives and control electronics.

Examples described herein may relate to a method of passing energy from ground level to the live components of the DCCB. Examples described herein may relate to a method of distributing energy amongst the different components at HVDC line potential.

Electrical isolation transformers may be used to supply power to the DCCB electrically. Optical powering (using lasers and photodiodes) may be used to supply power to the DCCB. A high-frequency circulating current capacitively coupled via high-voltage capacitors may be used to supply power to the DCCB. Pneumatic powering may be used to supply power to the DCCB.

Mechanical powering via a motor-generator set may be used for supplying power to the DCCB.

Energy may be distributed within the DCCB by means of a high-frequency current loop and current transformers.

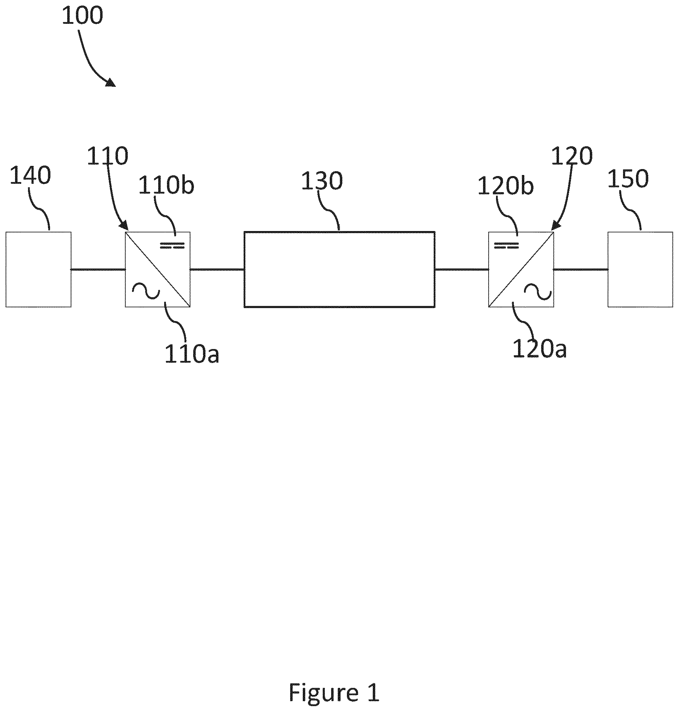

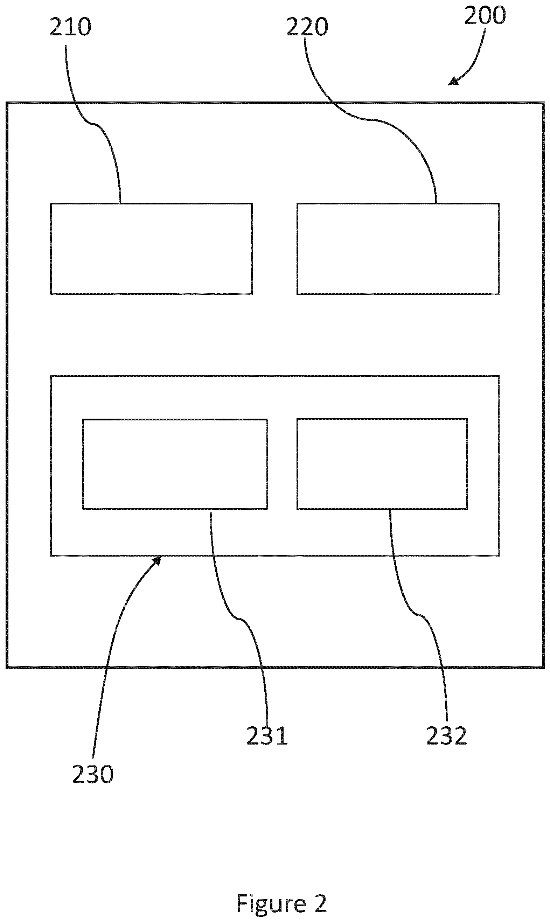

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, for instance.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is connected to a first AC network 140. The first AC network 140 is connected to the first AC side 110a of the first power conversion means 110.

The second power conversion means 120 is connected to a second AC network 150. The second AC network 150 is connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance.

Also shown is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

The operation of the power transmission system 100 can be generically described as follows. The first AC power generation network 140 generates AC power that is provided to first power conversion means 110 at the first AC side 110a. The first power conversion means 110 converts the received AC power to a DC power for transmission to second power conversion means 120. The DC power is transmitted from the first DC side 110b over the power transmission medium 130 to the second DC side 120b of second power conversion means 120. The second power conversion means 120 converts the received DC power back to AC power. The AC power is then provided from the second AC side 120a to the second AC network 150 for consumption, for instance. In some examples, the power conversion means 110 and 120 may be geographically remote. For instance, the first power conversion means 110 may reside with an off-shore wind farm and the second power conversion means 120 may reside on-shore.

It will be appreciated that various other electrical components may be located at any location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the AC networks 140, 150.

The power transmission network 100 may be operated using methods such as synchronous grid forming (SGFM) wherein either or both of the power converters 110, 120 behave as three-phase, positive-phase sequence AC voltage sources behind an impedance, that operate at a frequency synchronous with over SGFM sources connected to the power transmission network 100.

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means. The controller may be the controller 200 of Figure 2.

Figure 2 illustrates an embodiment of a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is shown as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may in certain embodiments be coupled to the transceiver 230.

The memory 210 may be a computer readable storage medium. For instance, the memory 210 may include a non-volatile computer storage medium. For example, the memory 210 may include a hard disk drive, flash memory etc.

Whilst not shown, the controller 200 may additionally include a user input device interface and/or a user output device interface, which may allow for visual, audible or haptic inputs/outputs. Examples include interfaces to electronic displays, touchscreens, keyboards, mice, speakers and microphones.

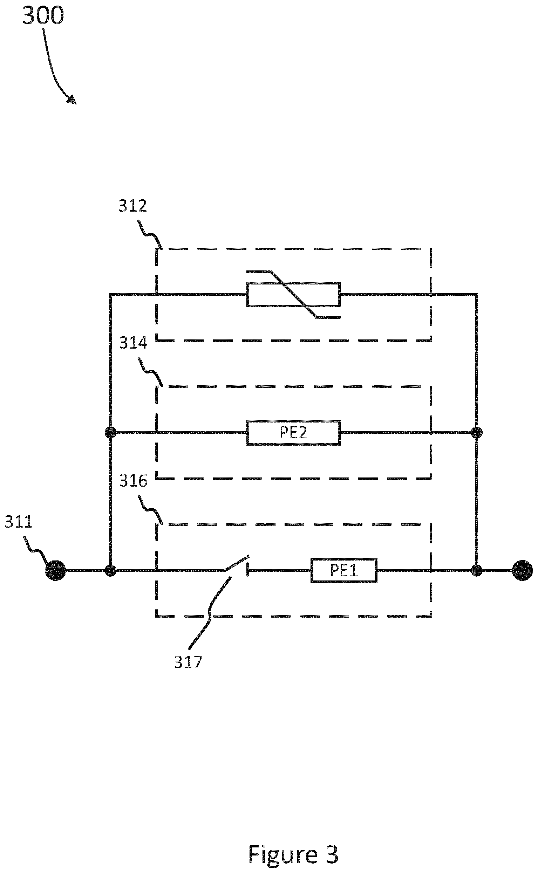

Figure 3 shows the components of a hybrid DCCB module 300 in accordance with aspects of the present disclosure.

The hybrid DCCB module 300 comprises the following electrical sub-systems: an energy dissipating branch 312, a current commutation branch 314 and a main branch 316 connected in parallel in a direct current line 311. The direct current line 311 may be a DC line or a HVDC line.

The hybrid DCCB module 300 may be much more complex than an AC circuit breaker. The hybrid DCCB module 300 may comprise several electrical sub-systems that may work together. Current may flow through the main conducting branch 316 in normal operation (e.g., when the DCCB is closed). The energy dissipating branch 312 may comprise a surge arrester. The current commutation branch 314 may temporarily pass current while the main conducting branch 316 is opening.

The energy dissipating branch 312 may comprise a varistor. The main conducting branch 316 may comprise a mechanical switch 317 and a first Power Electronic switch (PE1). The current commutation branch 314 may comprise a second Power Electronic switch (PE2).

PE2 may be suitable for HVDC applications. PE2 may be suitable for the hybrid DCCB module 300. PE2 may be configured to withstand the transient voltage generated across the hybrid DCCB module 300. PE2 may be configured to withstand the entire voltage of the hybrid DCCB module 300. PE2 may be configured to withstand at least 500kV. PE2 may comprise a high number of series-connected IGBTs. PE2 may comprise greater than 100 series-connected IGBTs. The hybrid DCCB module 300 may generate a transient voltage whilst it is operating.

PE1 may be suitable for HVDC applications. PE1 may be suitable for the hybrid DCCB module 300. PE1 may be configured to generate voltage to divert the current out of the main conducting branch 316 and into the current commutation branch 314. PE1 may be configured to withstand a few kV. PE1 may be configured to withstand less than 500kV. PE1 may comprise fewer IGBTs than PE2. PE1 may comprise fewer series-connected IGBTs than PE2. PE1 may be smaller in size than PE2.

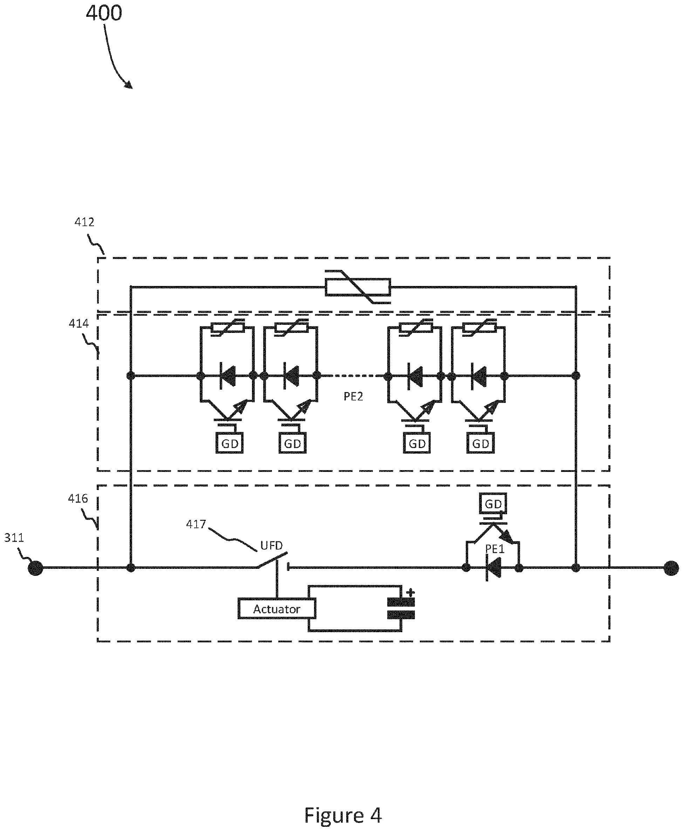

Figure 4 illustrates the components of a hybrid DCCB module 400 in accordance with aspects of the present disclosure.

The hybrid DCCB module 400 comprises the following electrical sub-systems: an energy dissipating branch 412, a current commutation branch 414 and a main branch 416 connected in parallel in a direct current line 311. The direct current line 311 may be a HVDC line.

The energy dissipating branch 412 may comprise a varistor. The main conducting branch 416 may comprise a mechanical switch 417 and a first Power Electronic switch (PE1). The current commutation branch 414 may comprise a second Power Electronic switch (PE2). PE1 and PE2 may be the same as PE1 and PE2 described above in relation to Figure 3.

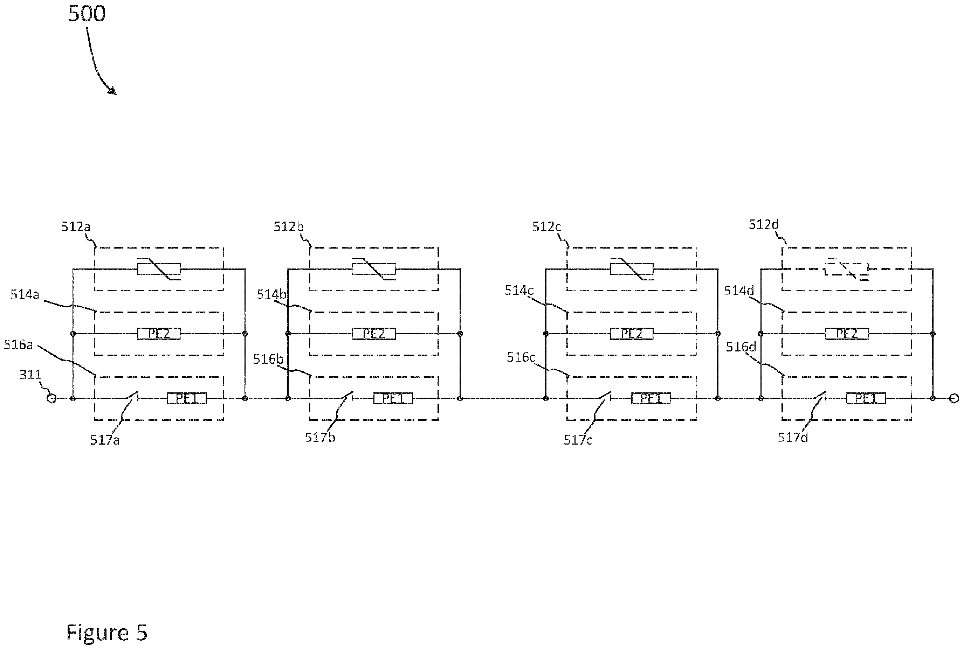

Figure 5 illustrates multiple hybrid DCCB modules 500 connected in series in accordance with aspects of the present disclosure.

Each of the hybrid DCCB modules 500 comprises the following electrical sub-systems: an energy dissipating branch 512a, 512b, 512c, 512d, a current commutation branch 514a, 514b, 514c, 514d and a main branch 516a, 516b, 516c, 516d connected in parallel in a direct current line 311. The direct current line 311 may be a DC line or a HVDC line.

Each of the main branches 516a, 516b, 516c, 516d may comprise a mechanical switch 517a, 517b, 517c, 517d. Each mechanical switch 517a, 517b, 517c, 517d may require stored energy for their operation. One or more of the mechanical switches 517a, 517b, 517c, 517d may require or operate with multiple electrical sub-systems. One or more of the electrical sub-systems may comprise an IGBT gate drive. One or more of the electrical sub-systems may require power. The power for one or more of the electrical sub-systems may be less than the power for one or more of the mechanical switches 517a, 517b, 517c, 517d.

The multiple hybrid DCCB modules 500 is an example of a complete DCCB, such that the voltage between the terminals of each sub-system or module is modest (for example in the range 50-100 kV). For example, the DCCB may comprise ten hybrid DCCB modules 500.

Any one or more of the electrical sub-systems 312, 314, 316, 412, 414, 416, 512a, 512b, 512c, 512d, 514a, 514b, 514c, 514d, 516a, 516b, 516c or 516d may be at the potential of the HVDC line 311 (typically 500 kV). Similarly, the mechanical switches 317, 417, 517a, 517b, 517c, 517d may be at the potential of the HVDC line 311.

Any one or more of the electrical sub-systems 312, 314, 316, 412, 414, 416, 512a, 512b, 512c, 512d, 514a, 514b, 514c, 514d, 516a, 516b, 516c or 516d may be floor-mounted on one or more post insulators. Any one or more of the electrical sub-systems 312, 314, 316, 412, 414, 416, 512a, 512b, 512c, 512d, 514a, 514b, 514c, 514d, 516a, 516b, 516c or 516d may be suspended from a ceiling. The electrical sub-systems may be suspended from a ceiling via one or more tension insulators.

A post insulator may be at least 4 meters. A post insulator may be approximately 4 meters for a DC line of approximately 500kV. A post insulator may be at least 4 meters for a DC line of approximately 500kV. A tension insulator may be at least 4 meters. A tension insulator may be approximately 4 meters for a DC line of approximately 500kV. A tension insulator may be at least 4 meters for a DC line of approximately 500kV.

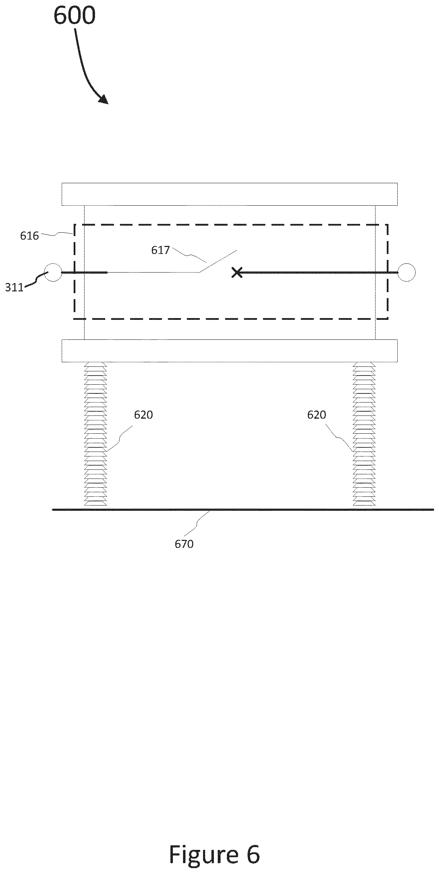

Figure 6 illustrates a DCCB system 600 in accordance with aspects of the present disclosure. The DCCB system 600 may be a mechanical arrangement of a DCCB.

The DCCB system 600 comprises a DCCB 616 mounted on support insulators 620. The support insulators 620 separate the DCCB 616 from ground potential 670. The support insulators 620 may provide an insulating gap between ground potential 670 and the electrical sub-systems (e.g., live components) of the DCCB 616. The support insulators 620 may be post insulators. The DCCB 616 may comprise one or more electrical sub-systems. The DCCB 616 may comprise a main branch 616. The main branch 616 may comprise a mechanical switch 617. The DCCB 616 may be a hybrid DCCB module such as hybrid DCCB module 300, 400, 500 described above in relation to Figs. 3, 4 and 5, respectively. The DCCB 616 is connected through a direct current line 311. The direct current line 311 may be a HVDC line.

The DCCB 616 may operate at the potential of the direct current line 311. Operating the DCCB 616 tends to make the provision of auxiliary power to the electrical sub-systems from ground level very challenging. The mechanical switch 617 in the main current branch 616 is particularly challenging since this may be required to open extremely quickly; for example, within a few milliseconds. Conventional methods of operating the mechanical switch 617 such as methods used to operate mechanical switches in AC circuit-breakers are not fast enough. Methods used to operate mechanical switches in AC circuit-breakers may include one or more of mechanical operating rods, springs or hydraulic systems.

The mechanical switch 617 may use a high-performance electrical actuator. The high-performance electrical actuator may be a Thomson coil. The high-performance electrical actuator may store energy of several kilojoules to operate. This energy store may be implemented as a capacitor or a storage capacitor. Auxiliary power may be required for other electrical sub-systems such as the gate drives of the power semiconductor devices, and control/communication Printed Circuit Boards (PCBs).

The DCCB 616 may be a mechanical DCCB design. The DCCB 616 may use capacitor discharge to create an artificial current zero. The energy requirements to pre-charge the capacitors may be in the range of some hundreds of kilojoules.

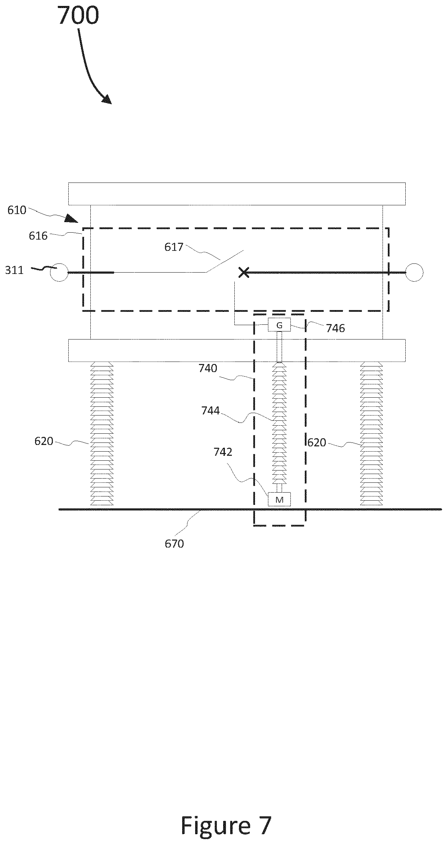

Figure 7 illustrates a DCCB system 700 in accordance with aspects of the present disclosure. The DCCB system 700 comprises the DCCB 616 mounted on support insulators 620. The DCCB 616 is connected through the direct current line 311.

The DCCB system 700 comprises a DCCB 610. The DCCB 610 comprises a first mechanical switch 617 connected in series through the direct current (DC) line 311, The DC line 311 may be a HVDC line 311. The DC line 311 may operate at a DC line potential. The DCCB 610 may be operated at the potential of the DC line 311. The DCCB 610 is mounted on support insulators 620 to separate the DCCB 610 from ground potential 670 by an insulating gap.

The DCCB system 700 comprises an auxiliary power system 740. The auxiliary power system 740 comprises an electric motor 742, an electrical generator 746. The electrical generator 746 is elevated above ground level and configured to operate at the DC line potential. The electrical motor 742 is configured to operate at ground potential 670. The electric motor 742 is operably coupled to the electrical generator 746 via a physical connection 744. The physical connection 744 is electrically insulated. The physical connection 744 may be a drive-shaft 744. The drive shaft 744 may be electrically insulated.

The electric motor 742 is provided at ground potential 670 and is coupled to the insulating drive-shaft 744 that spans the insulating gap between ground 670 and the live components of the DCCB 616. The other end of the drive-shaft 744 is mechanically connected to the electrical generator 746 at the potential of the DC line 311. The output of this electrical generator 746 is then used to pre-charge the energy storage system for the actuator of the mechanical switch 617. For example, by arranging for the electrical generator 746 to be a synchronous AC generator coupled to a diode rectifier. In a second step, the stored energy is then used to provide the electrical auxiliary power to the sub-systems of the DCCB 616. The electric motor 742 is shown in Figure 6 underneath the DCCB 616 with the drive-shaft 744 running vertically upwards. The electric motor 742 may be mounted on the ceiling with the drive-shaft running vertically downwards. The electric motor 742 may be mounted at some other earthed location with the drive-shaft 744 running horizontally or at an angle. However, a floor-mounted electric motor 742 may be simplistic, from the perspective of maintenance access.

The electric motor 742 may be a DC motor. The electric motor 742 may be an AC induction motor. The electric motor 742 may be any other type of motor. The electric motor 742 may be capable of running at variable speed to control the charging rate of the capacitor. The electrical generator 746 may be a DC generator. The electrical generator 746 may be a synchronous AC generator. A synchronous AC generator may be preferred for simplicity or reliability. The electrical generator 746 may comprise permanent magnets for excitation. The electrical generator 746 may be an alternator.

The output of the electrical generator 746 may be single-phase. The output of the electrical generator 746 may be poly-phase.

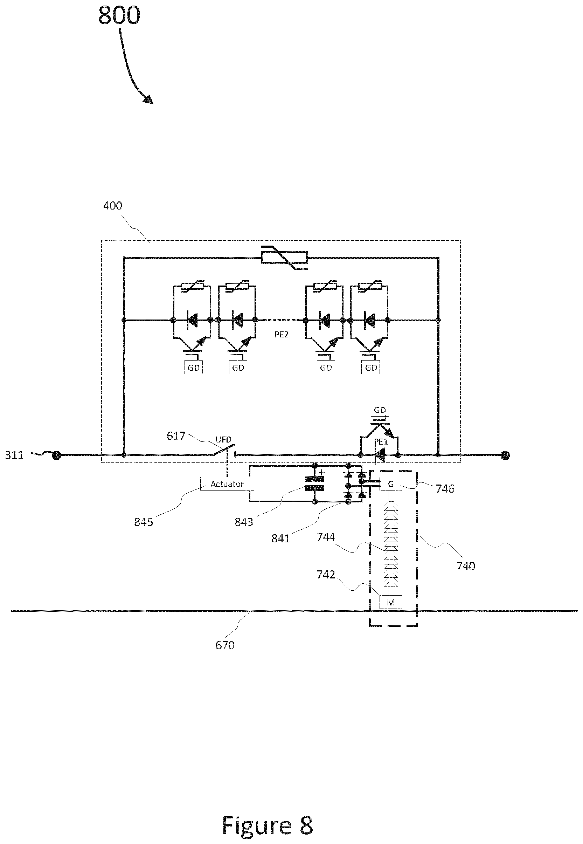

Figure 8 illustrates a DCCB system 800 in accordance with aspects of the present disclosure.

The DCCB system 800 comprises a DCCB 400. The DCCB 400 comprises a first mechanical switch 617 connected in series through the direct current (DC) line 311, The DC line 311 may be a HVDC line 311. The DC line 311 may operate at a DC line potential. The DCCB 400 is operated at the potential of the DC line 311. The DCCB 400 may be mounted on support insulators 620 to separate the DCCB 400 from ground potential 670 by an insulating gap.

The auxiliary power system 740 comprises an electric motor 742, an electrical generator 746. The electrical generator 746 is elevated above ground level and configured to operate at the DC line potential. The electrical motor 742 is configured to operate at ground potential 670. The electric motor 742 is operably coupled to the electrical generator 746 via a physical connection 744. The physical connection 744 is electrically insulated. The physical connection 744 may be a drive-shaft 744. The drive shaft 744 may be electrically insulated.

The DCCB 400 may be a hybrid DCCB module which is the same as hybrid DCCB module 400 described above in relation to Figure 4. The auxiliary power system 740 is the same as auxiliary power system 740 described above in relation to Figure 7.

The output of the electrical generator 746 may be coupled to a diode bridge rectifier 841 to supply DC power to a storage capacitor 843. The storage capacitor 843 may be discharged to provide power to an actuator 845 for switching the mechanical switch 617. A typical alternator from a car can produce 1-2 kW which may be enough to re-charge the storage capacitor 843 in a few seconds.

The auxiliary power system 740 may be operated for a predetermined duration. The auxiliary power system 740 may not run continuously. Maximum power from the auxiliary power system 740 may only be for short durations (seconds) very infrequently. The auxiliary power system 740 may be operated after the DCCB 400 has operated. Normal operation of the DCCB 400 may include operating the DCCB 400 once or twice per year. The auxiliary power system 740 may be operated intermittently or at low speed to maximise its lifetime.

The auxiliary power system 740 may comprise two or more sets of electric motors 742 and electrical generators 746. For reliability reasons, two or more redundant motor-generator sets may be provided so that the DCCB 400 can still be re-charged even if one motor-generator set fails.

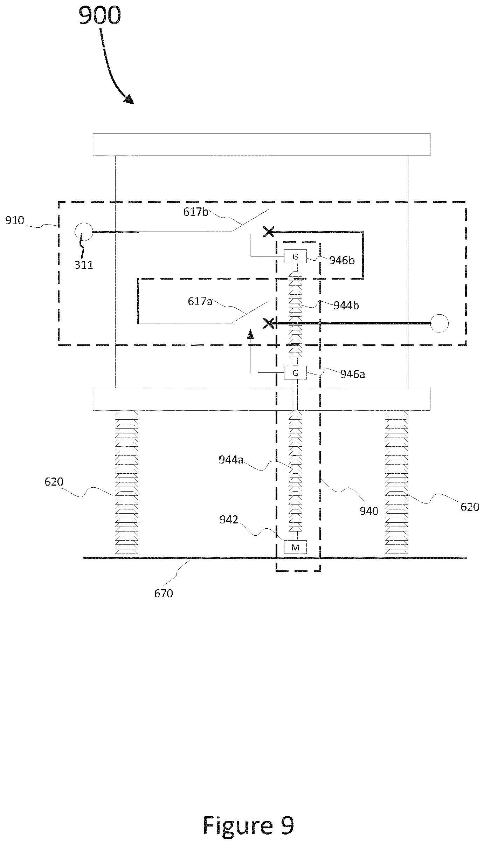

Figure 9 illustrates a DCCB system 900 in accordance with aspects of the present disclosure.

The DCCB system 900 comprises a DCCB 910. The DCCB 910 is connected through the direct current (DC) line 311, The DC line 311 may be a HVDC line 311. The DC line 311 may operate at a DC line potential. The DCCB 910 is operated at the potential of the DC line 311. The DCCB 910 is mounted on support insulators 620 to separate the DCCB 910 from ground potential 670 by an insulating gap.

The DCCB 910 may comprise a first interrupting unit 617a and a second interrupting unit 617b connected in series. The first interrupting unit 617a may be a mechanical switch. The second interrupting unit 617b may be a mechanical switch.

The DCCB 910 comprises an auxiliary power system 940; which may be similar to auxiliary power system 740 described above in relation to figures 7 and 8.

The auxiliary power system 940 comprises an electric motor 942, a first electrical generator 946a and a second electrical generator 946b.

The first electrical generator 946a is arranged to power the first interrupting unit 917a. The second electrical generator 946b is arranged to power the second interrupting unit 917b.

The first electrical generator 946a is elevated above ground level and configured to operate at a first potential. The second electrical generator 946b is elevated above ground level and configured to operate at a second potential. The first interrupting unit 617a may operate at a first DC line potential. The second interrupting unit 617b may operate at a second DC line potential.

The first potential may be the first DC line potential. The second potential may be the second DC line potential. The first potential may be different to the second potential.

The electrical motor 942 is configured to operate at ground potential 670. The electric motor 942 is operably coupled to a first electrical generator 946a via a first physical connection 944a. The electric motor 942 is also operably coupled to the second electrical generator 946b via a second physical connection 944b. The first physical connection 944a and second physical connection 944b are electrically insulated.

The electric motor 942 may be connected to the first electrical generator 946a via a gear arrangement. The electric motor 942 may be connected to the second electrical generator 946b via a gear arrangement.

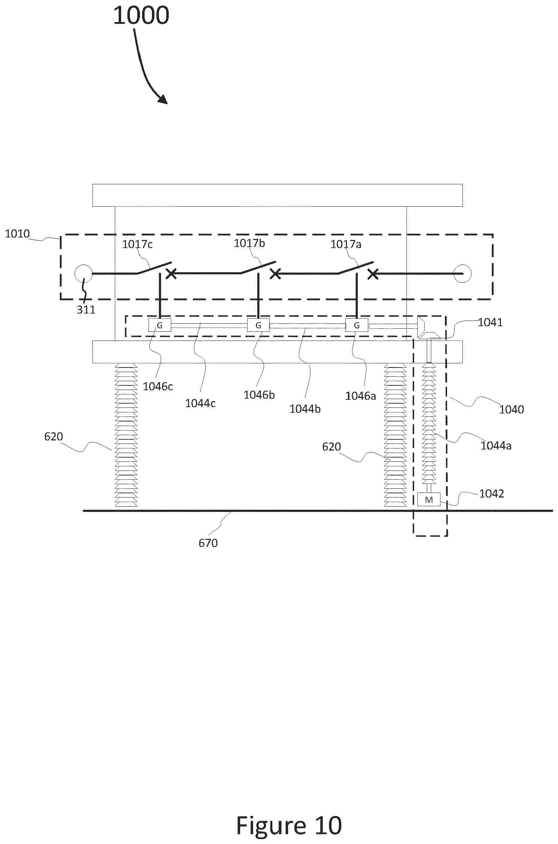

Figure 10 illustrates a DCCB system 1000 in accordance with aspects of the present disclosure.

The DCCB system 1000 comprises a DCCB 1010. The DCCB 1010 is connected through the direct current (DC) line 311, The DC line 311 may be a HVDC line 311. The DC line 311 may operate at a DC line potential. The DCCB 1010 is operated at the potential of the DC line 311. The DCCB 1010 is mounted on support insulators 620 to separate the DCCB 1010 from ground potential 670 by an insulating gap.

The DCCB 1010 may comprise a first interrupting unit 1017a, a second interrupting unit 1017b and a third interrupting unit 1017c connected in series. The first interrupting unit 1017a may be a mechanical switch. The second interrupting unit 1017b may be a mechanical switch. The third interrupting unit 1017c may be a mechanical switch.

The DCCB 1010 comprises an auxiliary power system 1040; which may be similar to auxiliary power system 740 or auxiliary power system 940 described above in relation to figures 7, 8 and 9. The auxiliary power system 1040 comprises an electric motor 1042, a first electrical generator 1046a, a second electrical generator 1046b and a third electrical generator 1046c.

The first electrical generator 1046a is arranged to power the first interrupting unit 1017a. The second electrical generator 1046b is arranged to power the second interrupting unit 1017b. The third electrical generator 1046c is arranged to power the third interrupting unit 1017c.

The first electrical generator 1046a is elevated above ground level and configured to operate at a first potential. The second electrical generator 1046b is elevated above ground level and configured to operate at a second potential. The third electrical generator 1046c is elevated above ground level and configured to operate at a third potential. The first interrupting unit 1017a may operate at a first DC line potential. The second interrupting unit 1017b may operate at a second DC line potential. The third interrupting unit 1017b may operate at a third DC line potential.

The first potential may be the first DC line potential. The second potential may be the second DC line potential. The third potential may be the third DC line potential.

In a normal closed position of the DCCB 1010, the first DC line potential, second DC line potential and third DC line potential may be substantially equal.

Following operation of the DCCB 1010, the first DC line potential, second DC line potential and third DC line potential may be substantially different. Operation of the DCCB 1010 may involve opening the DCCB 1010. Operation of the DCCB 1010 may involve opening then closing the DCCB 1010. Operation of the DCCB 1010 may involve clearing a fault. For example, the first potential may be different to the second potential, the first potential may be different to the third potential., and the second potential may be different to the third potential.

The electrical motor 1042 is configured to operate at ground potential 670. The electric motor 1042 is operably coupled to a first electrical generator 1046a via a first physical connection 1044a. The electric motor 1042 is also operably coupled to the second electrical generator 1046b via a second physical connection 1044b. The electric motor 1042 is also operably coupled to the third electrical generator 1046c via a third physical connection 1044c. The first physical connection 1044a, second physical connection 1044b and third physical connection 1044c are electrically insulated. The first physical connection 1044a is connected to the second physical connection 1044b and third physical connection 1044c via a gear arrangement 1041.

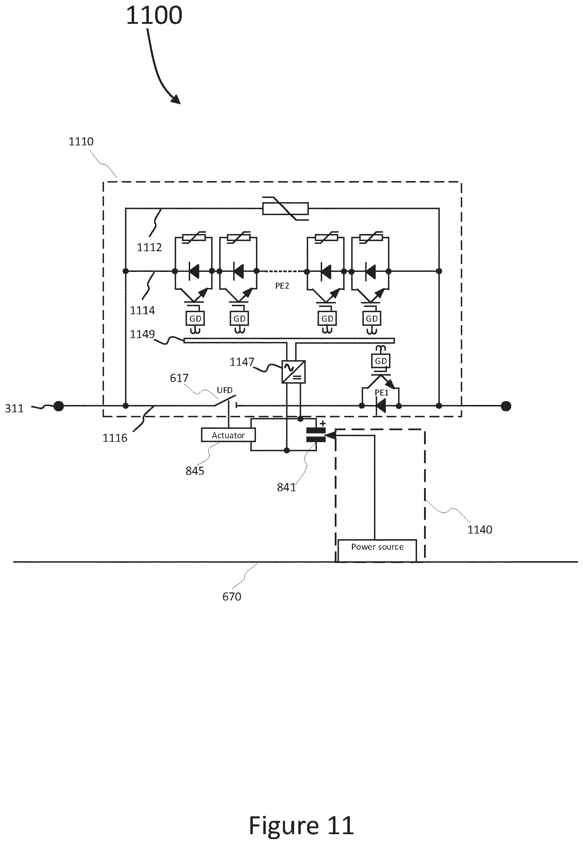

Figure 11 illustrates a DCCB system 1100 in accordance with aspects of the present disclosure.

The DCCB system 1100 comprises a DCCB 1110. The DCCB 1110 may be a hybrid DCCB which may be the similar to hybrid DCCB 400 described above in relation to Figures 4 and 8.

The DCCB 1110 comprises the following electrical sub-systems: an energy dissipating branch 1112, a current commutation branch 1114 and a main branch 1116 connected in parallel in a direct current line 311. The direct current line 311 may be a HVDC line.

The energy dissipating branch 1112 may comprise a varistor. The main conducting branch 1116 may comprise a mechanical switch 617 and a first Power Electronic switch (PE1). The current commutation branch 1114 may comprise a second Power Electronic switch (PE2). PE1 and PE2 may be the same as PE1 and PE2 as described above in relation to Figure 3.

The DCCB 1110 may comprise several (for example, ten) mechanical switches 617, each requiring stored energy for their operation, together with hundreds of other sub-systems requiring smaller amounts of power (for example, IGBT gate drives). While in normal operation all of these may be at the same potential (that of the DC line 311), for some milliseconds while the DCCB 1110 is operating, the two main terminals of the DCCB may be at extremely different electrical potentials. For example, one end could be grounded (via the fault) and the other end be at 800 kV with respect to ground. Hence all these different sub-systems may be insulated not only from ground but from each other.

The DCCB system 1100 separates the problem of supplying energy to the sub-systems of the DCCB 1110 into two parts: the primary energy transfer from ground, across the very high potential difference that is present in normal operation, and the secondary energy distribution within the DCCB 1110 (or within each module of the DCCB 1110). The means of energy transmission/distribution may not be the same for the two parts.

An auxiliary power system 1140 may be used for the first stage. The auxiliary power system 1140 may comprise an isolating transformer to provide power across this high-voltage isolation barrier. However, this may be very difficult in practice because of the very large voltage (e.g., 500 kV) that is permanently present. Even if it is not particularly difficult to design an isolation transformer that will withstand this voltage for a short time, to design and manufacture it for reliable long-term operation may be much more difficult. A particular problem is "partial discharge", where repeated small electrical discharges take place in the insulating material, leading to gradual deterioration and eventual failure.

The auxiliary power system 1140 may comprise one or more of optical powering, using a high-frequency circulating current capacitively coupled via high-voltage capacitors, or pneumatic powering. The auxiliary power system 1140 may comprise a motor-generator set in which a motor at ground potential is coupled to an insulating drive-shaft and thence to one or more generators at the DCCB live potential. Such an auxiliary power system 1140 may be the same or similar to auxiliary power system 740, 940 or 1040 described above in relation to Figs. 7, 8, 9 or 10.

The auxiliary power system 1140 may comprise an electric motor, an electrical generator. The electrical generator may be elevated above ground level and configured to operate at the DC line 311 potential. The electrical motor may be configured to operate at ground potential 670. The electric motor may be operably coupled to the electrical generator via a physical connection. The physical connection may be electrically insulated. The physical connection may be a drive-shaft. The drive shaft may be electrically insulated.

The electrical generator(s) may be synchronous AC generators, the output of which may be coupled via a diode rectifier and used to provide the charging supply for the storage capacitor 841 of the actuator 845 for the DCCB mechanical switch 617.

Thereafter, the storage capacitor 841 is used as the energy source for the second-stage energy distribution system. This takes the form of an inverter 1147 connected across the storage capacitor 841, which is used to drive a high-frequency current (for example, in the range 1 kHz to 100 kHz) through a wire loop 1149. The wire loop 1149 passes through a number of current transformers (CTs), each of which provides isolated electrical power to one of the other sub-systems of the DCCB 1110, for example to one IGBT gate drive. This system is, in effect, a type of isolation transformer.

Isolation transformers may be impractical for the auxiliary power system 1140 to provide primary energy transmission from ground potential 670 because of the difficulty of designing and manufacturing them to withstand the permanent high voltage that exists across this gap. However, one or more isolation transformers may be used in the second (distribution) stage because firstly there is no permanent voltage between the high-frequency current loop and the CT secondaries; instead there is only a short-duration (impulse) voltage and hence the design of the insulation system is made much simpler. Secondly, the DCCB 1110 may be split into several modules connected in series such that, within each module, the peak voltage experienced between the wire loop 1149 (the CT primary) and the CT secondaries is only a few tens of kV.

In some examples, where the DCCB 1110 comprises multiple modules connected in series, a separate electrical generator and diode rectifier may be provided for charging the storage capacitor of each mechanical switch and driven via a single motor and an arrangement of drive-shafts and gears (similar to that shown in Figures 9 and 10).

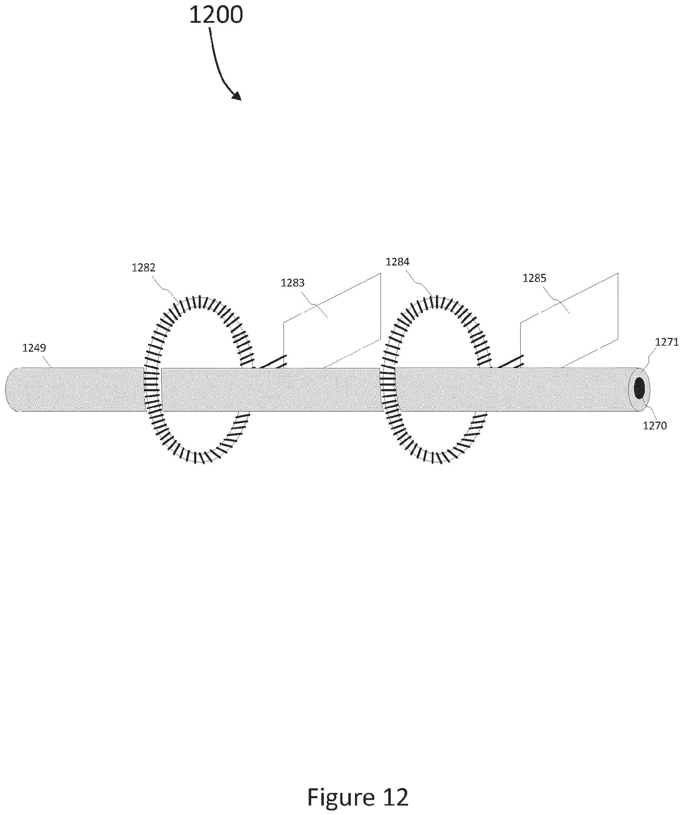

Figure 12 illustrates a transformer 1200 in accordance with aspects of the present disclosure.

The transformer 1200 may be a section of an isolation transformer as described above in relation to Figure 11. The transformer 1200 comprises a wire 1249 that forms part of a wire loop (note that the rest of the loop is not shown in Figure 12) which may be the same or similar to wire loop 1149 described above in relation to Figure 11.

The wire loop 1249 may comprise a primary conductor 1270. The wire loop may comprise an insulation 1271. The wire loop may not comprise an insulation 1271.

The wire loop 1249 passes through a first current transformer 1282 and a second current transformer 1284. The first current transformer 1282 provides isolated electrical power to a first electronic board 1283 which is part of a first electrical sub-system of a DCCB; such as DCCB 1110, for example, to a first IGBT gate drive. The second current transformer 1284 provide isolated electrical power to a second electronic board 1285 which is part of a second electrical sub-system of a DCCB; such as DCCB 1110, for example to a second IGBT gate drive.

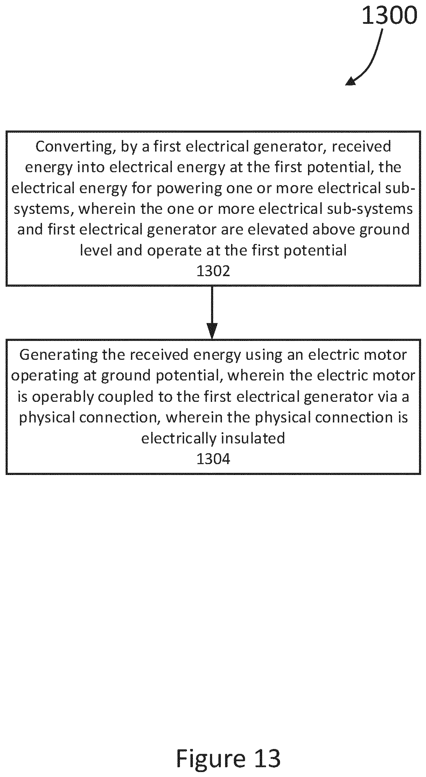

Figure 13 illustrates a flowchart of a method 1300 of operating a direct current circuit breaker in accordance with aspects of the present disclosure. The method 1300 may be a method of operating a direct current circuit breaker to interrupt a direct current flowing through a direct current line, wherein the direct current line comprises a first potential with respect to ground potential and is elevated above ground level providing an electrically insulated gap. The operations of the method may be implemented by a DCCB system as described herein. In some implementations, the DCCB system may execute a set of instructions to control the function elements of the DCCB system to perform the described functions.

A first step 1302 comprises, converting, by a first electrical generator, received energy into electrical energy at the first potential, the electrical energy for powering one or more electrical sub-systems, wherein the one or more electrical sub-systems and first electrical generator are elevated above ground level and operate at the first potential. The operations of step 1302 may be performed in accordance with examples as described herein. In some implementations, aspects of the operations of step 1302 may be performed by a DCCB system as described with reference to any one of Figures 7 to 12.

A second step 1304 comprises, generating the received energy using an electric motor operating at ground potential, wherein the electric motor is operably coupled to the first electrical generator via a physical connection, wherein the physical connection is electrically insulated. The operations of step 1304 may be performed in accordance with examples as described herein. In some implementations, aspects of the operations of step 1304 may be performed by a DCCB system as described with reference to any one of Figures 7 to 12.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein also provides a direct current circuit breaker system operable to interrupt a direct current flowing through a direct current line, wherein the direct current line has a first potential with respect to ground potential and is elevated above ground level providing an electrically insulated gap, the direct current circuit breaker system comprising: one or more electrical sub-systems elevated above ground level and configured to operate at the first potential; a first electrical generator elevated above ground level and configured to operate at the first potential, wherein the first electrical generator is arranged to convert received energy into electrical energy at the first potential, the electrical energy for powering the one or more electrical sub-systems; and an electric motor for generating the received energy, wherein the electric motor is configured to operate at ground potential and is operably coupled to the first electrical generator via a physical connection, wherein the physical connection is electrically insulated.

Such a direct current circuit breaker system tends to be simpler and more cost-effective compared to direct current circuit breakers in the prior art.

The physical connection may be sufficiently electrically insulated to withstand the potential difference between the first potential and the ground potential.

The direct current circuit breaker system may comprise a direct current circuit breaker. The direct current circuit breaker may comprise the one or more electrical sub-systems. The direct current circuit breaker may be a hybrid direct current circuit breaker. The direct current circuit breaker may be a mechanical direct current circuit breaker.

The electrically insulated gap may be between the direct current line and ground level. The electrically insulated gap may be between the direct current line and an object on the ground.

The direct current line may be a high voltage direct current line. The first potential may be about 500kV.

The direct current circuit breaker system may comprise post insulators. The direct current circuit breaker system may comprise suspension insulators. The direct current circuit breaker may be floor mounted on post insulators. The direct current circuit breaker may be ceiling mounted supported by suspension insulators.

At least one of the one or more electrical sub-systems may be floor mounted on post insulators. At least one of the one or more electrical sub-systems may be ceiling mounted supported by suspension insulators.

At least one of the one or more electrical sub-systems may be a mechanical switch, a gate drive or a printed circuit board. A gate drive may be part of a power semiconductor device. A printed circuit board may be for a control circuit. A printed circuit board may be for a communication circuit.

The first electrical generator may be positioned at a first elevation. At least one of the one or more electrical sub-systems may be positioned at a second elevation. The first elevation may be substantially the same as the second elevation.

The electric motor may be positioned at ground level. The physical connection may be arranged substantially vertically upwards from the electric motor to the first electrical generator.

The electric motor may be positioned at a third elevation. The third elevation may be substantially the same as the first elevation. The physical connection may be arranged substantially horizontally from the third elevation to the first elevation. The third elevation may be higher than the first elevation. The physical connection may be arranged at an angle relative to ground level. The physical connection may be arranged substantially vertically downwards from the electric motor to the first electrical generator.

The electric motor may be configured to operate at maximum power intermittently.

The electrical generator may be a direct current generator. The electrical generator may be a synchronous alternating current generator. The electrical generator may comprise an alternator.

The electric motor may comprise an air compressor. The electric motor may comprise a hydraulic pump.

The electrical energy may comprise a single phase. The electrical energy may comprise poly-phase.

The received energy may be mechanical energy. The received energy may be kinetic energy. The received energy may be kinetic energy or mechanical energy. The received energy may be non-electrical.

The direct current circuit breaker may further comprise an energy storage system arranged to store the electrical energy from the first electrical generator. The energy storage system may comprise a capacitor.

The first electrical generator may comprise a synchronous alternating current generator. The synchronous alternating current generator may comprise permanent magnets for excitation. The synchronous alternating current generator may be coupled to a rectifier. The rectifier may be a diode rectifier. The rectifier may be a diode bridge rectifier. The rectifier may be configured to convert the alternating current from the synchronous alternating current generator into direct current.

The first electrical generator may comprise a direct current generator. The electric motor may be configured to generate the received energy at a variable rate. The first electrical generator may be configured to generate electrical energy at a variable rate. The variable rate may be a variable rotational rate of an electric motor. The variable rate may be a variable air flow rate of an air compressor. The variable rate may be a variable hydraulic fluid flow rate of a hydraulic pump. The variable rate of the received energy may be determined by the required charging rate of an energy storage system coupled to the electrical generator. The variable rate of the received energy may be determined by the required charging rate of a capacitor coupled to the electrical generator.

At least one of the one or more sub-systems may comprise an actuator for switching a mechanical switch from a closed state to an open state or for switching the mechanical switch from the open state to the closed state. The mechanical switch may be in a main current branch of the direct current circuit breaker. The mechanical switch may be operable to interrupt the direct current flowing through the DC line. The mechanical switch may be operable to interrupt the direct current flowing through the DC line by switching from a closed state to an open state. The electrical energy from the electrical generator may be used for the actuator for switching the mechanical switch from a closed state to an open state.

The actuator may comprise a Thomson coil.

The physical connection may comprise a drive-shaft.

The first electrical generator may comprise an air turbine. The electric motor may comprise an air compressor. The physical connection may comprise an air pipe. The first electrical generator may comprise a hydraulic turbine. The electric motor may comprise a hydraulic pump. The physical connection may comprise a hydraulic pipe.

The direct current circuit breaker system may further comprise one or more second electrical generators coupled to the electric motor via the physical connection.

The direct current circuit breaker may be a hybrid direct current circuit breaker. The hybrid direct current circuit breaker may comprise a main conducting branch through which current flows in normal operation (when the DCCB is closed). The hybrid direct current circuit breaker may comprise energy dissipating branch (surge arrester). The hybrid direct current circuit breaker may comprise a current commutation branch whose function is to temporarily pass current while the main conducting branch is opening.

The first electrical generator may further comprise an isolation transformer. The isolation transformer may be arranged to convert the electrical energy at the first potential to isolated electrical energy to the one or more electrical sub-systems. The isolation transformer may comprise one or more of: an inverter, a storage capacitor, a wire loop or a current transformer, CT. The inverter may be connected across the storage capacitor for driving a high-frequency current through the wire loop. The high frequency current may be in the range of 1kHz to 100 kHz. The wire loop may pass through one or more current transformers, CT. Each of the one or more current transformers may be arranged to provide isolated electrical energy to the one or more electrical sub-systems.

There is provided a method of operating a direct current circuit breaker system to interrupt a direct current flowing through a direct current line, wherein the direct current line comprises a first potential with respect to ground potential and is elevated above ground level providing an electrically insulated gap, the method comprising: converting, by a first electrical generator, received energy into electrical energy at the first potential, the electrical energy for powering one or more electrical sub-systems, wherein the one or more electrical sub-systems and first electrical generator are elevated above ground level and operate at the first potential; and generating the received energy using an electric motor operating at ground potential, wherein the electric motor is operably coupled to the first electrical generator via a physical connection, wherein the physical connection is electrically insulated.

Such a method of operating a direct current circuit breaker system tends to be simpler and more cost-effective than methods of operating a direct current circuit breaker in the prior art.

The method may further comprise storing the electrical energy from the first electrical generator in an energy storage system. The energy storage system may comprise a capacitor.

The first electrical generator may comprise a synchronous alternating current generator. The synchronous alternating current generator may be coupled to a rectifier. The first electrical generator may comprise a direct current generator. The first electrical generator may be configured to generate the electrical energy at a variable rate.

At least one of the one or more electrical sub-systems may comprise an actuator for switching a mechanical switch from a closed state to an open state or for switching the mechanical switch from the open state to the closed state. The actuator may comprise a Thomson coil.

The physical connection may comprise a drive-shaft.

The first electrical generator may comprise an air turbine, the electric motor comprises an air compressor and the physical connection comprises an air pipe. The first electrical generator may comprise a hydraulic turbine, the electric motor may comprise a hydraulic pump and the physical connection may comprise a hydraulic pipe.

The method may further comprise coupling one or more second electrical generators to the electric motor via the physical connection.

The first electrical generator may further comprise an isolation transformer.

## Claims

1. A direct current circuit breaker system operable to interrupt a direct current flowing through a direct current line, wherein the direct current line has a first potential with respect to ground potential and is elevated above ground level providing an electrically insulated gap, the direct current circuit breaker system comprising:
one or more electrical sub-systems elevated above ground level and configured to operate at the first potential;
a first electrical generator elevated above ground level and configured to operate at the first potential, wherein the first electrical generator is arranged to convert received energy into electrical energy at the first potential, the electrical energy for powering the one or more electrical sub-systems; and
an electric motor for generating the received energy, wherein the electric motor is configured to operate at ground potential and is operably coupled to the first electrical generator via a physical connection, wherein the physical connection is electrically insulated.

2. The direct current circuit breaker system of claim 1, further comprising an energy storage system arranged to store the electrical energy from the first electrical generator.

3. The direct current circuit breaker system of claim 2, wherein the energy storage system comprises a capacitor.

4. The direct current circuit breaker system of any preceding claim, wherein the first electrical generator comprises a synchronous alternating current generator.

5. The direct current circuit breaker system of claim 4, wherein the synchronous alternating current generator is coupled to a rectifier.

6. The direct current circuit breaker system of any one of claims 1 to 3, wherein the first electrical generator comprises a direct current generator.

7. The direct current circuit breaker system of any preceding claim, wherein the first electrical generator is configured to generate the electrical energy at a variable rate.

8. The direct current circuit breaker system of any preceding claim, wherein at least one of the one or more electrical sub-systems comprises an actuator for switching a mechanical switch from a closed state to an open state or for switching the mechanical switch from the open state to the closed state.

9. The direct current circuit breaker system of claim 8, wherein the actuator comprises a Thomson coil.

10. The direct current circuit breaker system of any preceding claim, wherein the physical connection comprises a drive-shaft.

11. The direct current circuit breaker system of any one of claims 1 to 9, wherein the first electrical generator comprises an air turbine, the electric motor comprises an air compressor and the physical connection comprises an air pipe.

12. The direct current circuit breaker system of any one of claims 1 to 9, wherein the first electrical generator comprises a hydraulic turbine, the electric motor comprises a hydraulic pump and the physical connection comprises a hydraulic pipe.

13. The direct current circuit breaker system of any preceding claim, further comprising one or more second electrical generators coupled to the electric motor via the physical connection.

14. The direct current circuit breaker system of any preceding claim, wherein the first electrical generator further comprises an isolation transformer.

15. A method of operating a direct current circuit breaker system to interrupt a direct current flowing through a direct current line, wherein the direct current line comprises a first potential with respect to ground potential and is elevated above ground level providing an electrically insulated gap, the method comprising:
converting, by a first electrical generator, received energy into electrical energy at the first potential, the electrical energy for powering one or more electrical sub-systems, wherein the one or more electrical sub-systems and first electrical generator are elevated above ground level and operate at the first potential; and
generating the received energy using an electric motor operating at ground potential, wherein the electric motor is operably coupled to the first electrical generator via a physical connection, wherein the physical connection is electrically insulated.
